# EUROPÄISCHE PATENTSCHRIFT

(11) **EP 3 372 064 B1**
(45) Veröffentlichungstag und Bekanntmachung des Hinweises auf die Patenterteilung: **26.02.2020**
(21) Anmeldenummer: 18159368.2
(22) Anmeldetag: 01.03.2018
(51) Int. Cl.: A01C 7/08

(54) **VERTEILERTURM EINER LANDWIRTSCHAFTLICHEN MASCHINE, LANDWIRTSCHAFTLICHE MASCHINE UND VERFAHREN ZUM BETREIBEN EINER SOLCHEN LANDWIRTSCHAFTLICHEN MASCHINE**
AGRICULTURAL MACHINE AND METHOD FOR OPERATING AN AGRICULTURAL MACHINE, DISTRIBUTOR TOWER OF AN AGRICULTURAL MACHINE
TOUR DE DISTRIBUTION D'UNE MACHINE AGRICOLE, MACHINE AGRICOLE ET PROCÉDÉ DE FONCTIONNEMENT D'UNE TELLE MACHINE AGRICOLE

(30) Priorität: 08.03.2017 DE 102017203855
(43) Veröffentlichungstag der Anmeldung: 12.09.2018
(73) Patentinhaber: Horsch Maschinen GmbH, 92421 Schwandorf (DE)
(72) Erfinder: PIRKENSEER, Michael, 92421 Schwandorf (DE)
(74) Vertreter: Benninger, Johannes

(56) Entgegenhaltungen:
- EP-A1- 2 756 744
- EP-A1- 3 284 332
- DE-A1-102008 050 735
- DE-A1-102009 026 332

## Beschreibung

Die vorliegende Erfindung betrifft einen Verteilerturm für eine landwirtschaftliche Maschine zum Ausbringen von Verteilgut mit den Merkmalen des unabhängigen Anspruchs 1. Zudem betrifft die Erfindung ein Verfahren zum Betreiben einer landwirtschaftlichen Maschine zum Ausbringen von Verteilgut mit den Merkmalen des unabhängigen Anspruchs 12. Weiterhin betrifft die Erfindung eine landwirtschaftliche Maschine zum Ausbringen von granulatartigem Verteilgut mit den Merkmalen des Anspruchs 15.

Im landwirtschaftlichen Bereich kommen in der Praxis verschiedene landwirtschaftliche Maschinen zum Ausbringen und Verteilen von Verteilgut, wie beispielsweise Saatgut oder Dünger auf einem Feld zum Einsatz. Aus dem Stand der Technik ist bekannt, dass das Verteilgut in einem Vorratstank gelagert und von der landwirtschaftlichen Maschine mitgeführt wird. Das Verteilgut wird jeweils über eine Dosiervorrichtung aus dem Vorratstank entnommen, welche Dosiervorrichtung direkt unterhalb des Vorratstanks angeordnet ist. Das aus dem Vorratstank entnommene Verteilgut wird anschließend mit einem Luftstrom vermischt, so dass ein Verteilgut-Luftvolumenstrom gebildet wird. Der Luftstrom wird in der Regel von einem Gebläse erzeugt. Der gebildete Verteilgut-Luftvolumenstrom wird zunächst entlang einer Leitung bis zu einem Verteilerturm befördert, wodurch der Verteilgut-Luftvolumenstrom entsprechend der am Verteilerkopf des Verteilerturms vorgesehenen Abgänge in eine Vielzahl von Verteilgut-Luftvolumenströme aufgeteilt wird. Die einzelnen Verteilgut-Luftvolumenströme werden anschließend über Saatleitungen zu Ausbringelementen befördert, wodurch das Verteilgut in den Boden abgelegt werden kann.

Um eine möglichst gleichmäßige Verteilung des Verteilguts an allen Ausbringelementen zu erreichen, muss der Verteilerturm eine möglichst konstante Querverteilung und damit einen möglichst geringen Variationskoeffizienten an den einzelnen Abgängen aufweisen. In der Regel ist die Querverteilung umso konstanter, je konstanter die Luftvolumenströme, die Drücke sowie die Strömungsgeschwindigkeiten im Verteilerturm sind. Eine konstante Querverteilung wird in der Regel meist dann erreicht, sofern das Verteilgut über alle Abgänge an die Ausbringelemente befördert wird und sofern die Saatleitungen längenmäßig aufeinander abgestimmt sind. Beim Anlegen von Fahrgassen oder um ein Überlappen von Verteilgut beim Ausbringen auf das Feld zu vermeiden, ist es oftmals erforderlich, einzelne Abgänge des Verteilerturms mittels eines Absperrmittels abzusperren, was sich negativ auf eine konstante Querverteilung auswirken kann. Das Verteilgut wird in einem solchen Fall in das Steigrohr oder in eine dem Steigrohr vorgeordnete Leitung zurückgeführt.

Durch die DE 10 2005 038 216 A1 wird ein Verteilerturm beschrieben, bei welchem die Abgänge jeweils mittels eines Schiebers verschlossen und/oder geöffnet werden können. Durch das Abschalten einzelner Abgänge können in den offenen Abgängen zu hohe Strömungsgeschwindigkeiten hervorgerufen werden, was eine schlechtere Querverteilung beim Ausbringen des Verteilguts zur Folge haben kann. Die zu hohen Strömungsgeschwindigkeiten ließen sich zwar durch eine Verringerung des Luftvolumenstroms vermeiden. Jedoch bestehen dadurch die Nachteile, dass der Luftvolumenstrom womöglich zu gering ist, um das Verteilgut transportieren zu können, sowie dass der Verteilerturm durch das Verteilgut verstopft.

Durch die EP 0 799 560 B1 ist ein Verteilerturm offenbart, bei welchem jedem Abgang ein Absperrmittel zugeordnet ist, so dass der Verteilgut-Luftvolumenstrom je nach Stellung des Absperrmittels entweder an eine Saatleitung und eine Rückführleitung geleitet wird. Um bei der Umlenkung des Verteilgut-Luftvolumenstroms den Luftvolumenstrom entweichen lassen zu können, ist zwischen der Saatleitung und der Rückführleitung ein Bypass vorgesehen. Damit soll erreicht werden, dass weder die Verteilgutmenge noch der Luftvolumenstrom beim Abschalten einzelner Abgänge verringert werden müssen. Die Rückführleitung mündet in einem separaten Sammler für das Verteilgut, was sich jedoch als teileaufwändig und kostenintensiv herausgestellt hat. Darüber hinaus ist bei einem derartigen Verteilerturm erforderlich, dass in der Rückführleitung ein Rückstaudruck vorherrschen muss, damit der Luftvolumenstrom bei einer Rückführung des Verteilguts in den Sammler über den Bypass entweichen kann. Bei einem zu groß gewählten Rückstaudruck besteht hingegen die Gefahr, dass neben dem Luftvolumenstrom auch das Verteilgut über den Bypass entweichen kann. Damit herrschen ebenso bei diesem Verteilerturm keine konstanten Druckniveaus und Luftvolumenströme, was sich durch eine schlechtere Querverteilung widerspiegelt. Darüber hinaus ist es mit diesem System nicht möglich, ein Saatgut-Düngergemisch zu verarbeiten.

Durch die EP 0 642 729 A1 ist ein weiterer Verteilerturm offenbart, bei welchem ein Verteilgut-Luftvolumenstrom je nach Stellung eines Absperrmittels eine Saatleitung oder eine Rückführleitung passiert. Die Rückführleitung mündet im Steigrohr des Verteilerkopfs. Da gemäß der vorliegenden EP-Anmeldung neben dem Verteilgut auch der Luftvolumenstrom in die Steigleitung zurückgeführt wird, muss neben der Verteilgutmenge auch der Luftvolumenstrom deutlich verringert werden, damit das Verteilgut über den Verteilerturm überhaupt ausgebracht werden kann. Die Verringerung des Luftvolumenstroms bringt die Nachteile mit sich, dass im Verteilerturm unterschiedliche Drücke herrschen, was sich in einer schlechten Querverteilung widerspiegelt. Eine Luftabscheidung über einen Bypass, wie es beispielsweise in der EP 0 799 560 B1 offenbart ist, erfolgt bei diesem System nicht.

Eine Weiterbildung der EP 0 642 729 A1 beschreibt die EP 2 695 508 B1. Um die Rückführung des Verteilguts in das Steigrohr zu erleichtern, sind die bisher bekannten einzelnen Rückführleitungen durch ein trichterförmiges Element ersetzt worden. Da bei der EP 2 695 508 B1 ebenfalls keine Luftabscheidung über einen Bypass erfolgt, müssen bei der Rückführung des Verteilguts in das Steigrohr sowohl die Verteilgutmenge als auch der Luftvolumenstrom deutlich reduziert werden, was jedoch unterschiedliche Drücke im Verteilerturm und damit eine schlechtere Querverteilung zur Folgen haben.

Weitere Verteiltürme sind in der DE 41 06 711 C1 und in der DE 10 2013 014 386 A1 offenbart.

Durch die nachveröffentlichte EP 3 284 332 A1 ist ein Verteilerturm offenbart, welcher an seinem oberen Ende einen Verteilerkopf aufweist, an dessen Umfang eine Vielzahl von Abgängen angeordnet sind, so dass der Verteilgutluftvolumenstrom in eine Mehrzahl von einzelnen Verteilgutluftvolumenströmen aufgeteilt wird. Von den Abgängen führt jeweils eine Saatleitung in Richtung der Säschare. Zwischen dem Abgang und der Saatleitung ist eine Weiche angeordnet. Bei geöffneter Weiche wird der einzelne Verteilgutluftvolumenstrom in Richtung Säschare geleitet, während bei geschlossener Weiche der Verteilgutluftvolumenstrom einem Rückführbereich zugeführt wird, so dass der einzelne Verteilgutluftvolumenstrom in das Steigrohr des Verteilerturms zurückgeführt wird.

Durch die EP 2 756 744 A1 ist ein weiterer Verteilerkopf offenbart. Der Verteilerkopf umfasst einen pilzförmigen Verteilerkorpus, welcher am radial außen liegenden Rand eine Vielzahl von Auslassöffnungen bzw. Auslässen umfasst. Die Auslässe sind durch Auslassstutzen gebildet, die mit ihrem einem Ende in den Verteilerkorpus einsteckbar sind und an dessen anderem Ende die Ausbringleitungen anschließbar sind. Die Auslassstutzen besitzen integrierte Blockierelemente, um den jeweiligen Auslassstutzen blockieren zu können. Um das blockierte Verteilgut und damit auch den blockierten Luftvolumenstrom in das Steigrohr rückzuführen, umfasst der Verteilerkopf eine Rückführeinrichtung in Form eines das Steigrohr umgebenden Trichters. Im Boden des Verteilerkorpus sind jeweils vor den Auslässen Öffnungen ausgebildet. Den Öffnungen sind jeweils schwenkbar gelagerte Klappen zugeordnet, welche je nach Stellung die Öffnungen verschließen oder freigeben.

Durch die DE 10 2009 026 332 A1 ist ein Verteiler für eine pneumatische Verteilmaschine offenbart. Über den Verteilerkopf wird das über das Steigrohr ankommende Verteilgut auf Verteilerleitungen aufgeteilt, welche in Ausbringorganen münden. Dem Verteilerkopf ist ein Absperrschieber zugeordnet, der von unten in den Verteilerraum des Verteilerkopfs einschiebbar ist und herauschiebbar ist. In eingeschobener Position wird eine Halbseite des Verteilerkopfes mittels des Absperrschiebers blockiert.

Ein weiteres Problem bei den aus dem Stand der Technik bekannten Verteilertürmen besteht darin, dass die Querverteilung des Verteilguts je nach Länge der vorhandenen Saatgutleitungen variieren kann. Hintergrund ist, dass sich je nach Saatleitungslänge die Strömungsgeschwindigkeiten in den jeweiligen Saatleitungen ändern. Um dieses Problem zu vermeiden, wurde bisher versucht, die Saatleitungen möglichst gleichlang auszubilden, was jedoch bei landwirtschaftlichen Maschinen mit großer Arbeitsbreite kaum umzusetzen ist.

Eine vorrangige Aufgabe der Erfindung kann daher darin gesehen werden, einen Verteilerturm einer landwirtschaftlichen Maschine, eine landwirtschaftliche Maschine und ein Verfahren zum Betreiben einer solchen landwirtschaftlichen Maschine zur Verfügung zu stellen, bei welchen jeweils die Querverteilung und die im Verteilerturm vorherrschenden Drücke zu jedem Zeitpunkt weitgehend konstant bleiben. Zudem sollen die Abgänge, die Saatleitungen und die Rückführeinrichtung zu jedem Zeitpunkt pneumatisch miteinander verbunden werden.

Diese Aufgaben werden durch einen Verteilerturm einer landwirtschaftlichen Maschine zum Ausbringen von Verteilgut mit den Merkmalen des Anspruchs 1, durch ein Verfahren zum Betreiben einer solchen landwirtschaftlichen Maschine zum Ausbringen von Verteilgut mit den Merkmalen des Anspruchs 12 sowie durch eine landwirtschaftliche Maschine zum Ausbringen von Verteilgut mit zumindest einem Verteilerturm mit den Merkmalen des Anspruchs 15 gelöst. Weitere vorteilhafte Ausgestaltungen und Ausführungsformen werden in den abhängigen Ansprüchen beschrieben.

Die vorliegende Erfindung betrifft einen Verteilerturm für eine landwirtschaftliche Maschine zum Ausbringen von Verteilgut. Wenn im vorliegenden Zusammenhang von körnigem Verteilgut die Rede ist, so kann dies beispielsweise Saatgut oder Dünger oder dergleichen granulatartiges Gut sein. Auch Mischungen von Saatgut und Dünger sollen unter den Begriff des Verteilgutes im Sinne der vorliegenden Erfindung fallen. Die landwirtschaftliche Maschine, die insbesondere eine Verteilmaschine sein kann, ist mit mindestens einem Vorratstank für Verteilgut ausgestattet, aus dem das Verteilgut auf pneumatische Weise zum Verteilerturm befördert wird. Der Vorratstank kann trichterförmig ausgebildet sein. Wahlweise können auch zwei oder mehr separate Vorratsbehälter vorgesehen sein, so dass bspw. variabel einstellbare Mischungen aus Saatgut und Dünger ausgebracht und in gemischter Form mittels pneumatischer Förderung zum Verteilerturm gefördert werden können. Am tiefsten Punkt des Vorratsbehälters kann eine Dosiervorrichtung vorgesehen sein. Der Dosiervorrichtung kann ein Gebläse vorgeordnet sein, welches in einer Leitung einen Luftvolumenstrom erzeugt. Das Gebläse kann vorzugsweise als Radial- oder Zentrifugalgebläse ausgebildet sein. Die Dosiervorrichtung kann aus dem Vorratstank eine gewünschte Menge an Verteilgut entnehmen und kann es der Leitung zuführen, so dass sich das aus dem Vorratstank entnommene Verteilgut mit dem Luftvolumenstrom vermischt, woraus resultierend ein Verteilgut-Luftvolumenstrom gebildet wird. Mit Hilfe des Luftvolumenstroms kann das Verteilgut entlang der Leitung bis zu einem Verteilerturm transportiert werden, so dass das Verteilgut anschließend über eine Saatleitung zu bodennah angeordneten und/oder zu im Boden geführten Ausbringelementen geführt wird.

Der Verteilerturm umfasst normalerweise ein Steigrohr zum Zuführen eines Verteilgut-Luftvolumenstroms in einen sich an das Steigrohr anschließenden und insbesondere als Bestandteil des Verteilerturms ausgebildeten Verteilerkopf. Normalerweise ist der Verteilerkopf integraler Bestandteil des Verteilerturms und schließt an dessen Oberseite an das Steigrohr an, was jedoch nicht die einzige denkbare Bauform darstellt, so dass die Erfindung auch solche Verteilertürme umfassen soll, bei denen der Verteilerkopf kein bauliches Bestandteil des Verteilerturmes bildet bzw. nicht unmittelbar und/oder baulich mit diesem zusammengefasst ist. Das Steigrohr kann einen ungefähr vertikalen Verlauf oder einen leicht gegenüber einer vertikalen Achse geneigten Verlauf aufweisen.

Das Steigrohr kann mehrere Abschnitte aufweisen bzw. umfassen. In einem ersten Abschnitt kann das Steigrohr eine Düse aufweisen, mittels welcher eine zumindest bereichsweise Querschnittsverengung des Steigrohrs ausgebildet wird. An die zumindest bereichsweise Querschnittsverengung bzw. Düse kann sich in einem zweiten bzw. weiteren Abschnitt ein Diffusor anschließen, mittels welchem eine zumindest bereichsweise Querschnittserweiterung ausgebildet wird. An die zumindest bereichsweise Querschnittserweiterung bzw. an den Diffusor kann sich ein dritter bzw. ein weiterer Abschnitt beispielsweise in Form eines Wellrohrs anschließen, welches Wellrohr entlang seiner Längserstreckungsrichtung unterschiedliche Querschnitte aufweist.

Das Steigrohr mündet in den Verteilerkopf, welcher ringförmig ausgebildet sein kann. Der Verteilerkopf kann eine pilzkopfförmige Deckelfläche, eine flache Deckelfläche oder eine kegelige Deckelfläche oder dergleichen aufweisen. Der durch das Steigrohr bewegte Verteilgut-Luftvolumenstrom kann von unten gegen den Deckel des Verteilerkopfes prallen und von einer senkrechten Richtung und in eine zumindest weitgehend waagrechte Richtung umgelenkt werden, d.h. der Verteilgut-Luftvolumenstrom kann zunächst eine Richtungsumkehr aus einer zumindest weitestgehend vertikalen Bewegung entlang der Längserstreckungsrichtung des Steigrohrs in eine zumindest weitgehend waagrechte Bewegung in Richtung der Abgänge erfahren, indem das Verteilgut weitgehend senkrecht von unten am Deckel des Verteilerkopfes abprallt und durch den Luftvolumenstrom in Richtung der Abgänge geleitet wird.

Es sei an dieser Stelle ausdrücklich erwähnt, dass die Erfindung auch eine sog. kinematische Umkehrung umfassen soll, bei welcher anstelle eines Steigrohres ein Fallrohr vorgesehen ist, an dessen Unterseite der untenliegende Verteilerkopf anschließt, von dem zahlreiche Saatleitungen abzweigen. Ebenso soll die Erfindung Varianten mit schrägen Steig- oder Fallrohren umfassen, die in einen passend positionierten Verteilerkopf münden, dessen Verzweigungen nicht zwingend symmetrisch zu einer vertikalen Achse angeordnet sind, sondern die ggf. symmetrisch zu einer gegenüber einer Vertikalen geneigten Achse verlaufen bzw. abzweigen können. Wenn daher nachfolgend und/oder im Zusammenhang mit der gesamten Beschreibung und/oder den Ansprüchen von einem Steigrohr und/oder einem obenliegenden Verteilerkopf die Rede ist, so umfasst dies ebenfalls alternative Bauformen mit Fallrohr und untenliegendem Verteilerkopf sowie die weiteren alternativen Bauformen mit horizontalem oder geneigtem Förderrohr (anstelle eines sog. Steig- oder Fallrohres), an das sich ein Verteilerkopf mit einer Mehrzahl oder Vielzahl von Abzweigungen für die Saatleitungen anschließen kann.

Der Verteilerturm umfasst eine Vielzahl von Abgängen oder Abzweigungen am Verteilerkopf zur Aufteilung des Verteilgut-Luftvolumenstroms in eine Vielzahl von einzelnen Verteilgut-Luftvolumenströmen, welche Abgänge sich jeweils in mindestens eine Saatleitung und in mindestens eine Rückführeinrichtung verzweigen. Die mindestens eine Saatleitung kann in Reihen bzw. Ausbringelementen münden, so dass das Verteilgut auf das Feld ausgebracht wird. Die mindestens eine Rückführeinrichtung kann in das Steigrohr münden, so dass Verteilgut zurückgeführt wird.

Die einzelnen Abgänge können in einem gleichmäßigen Abstand am Umfang des Verteilerkopfs angeordnet sein. Je gleichmäßiger die Anordnung der Abgänge am Umfang des Verteilerkopfes ist, desto gleichmäßiger kann die Querverteilung des Verteilguts des Verteilerturms ausgebildet sein. Die Querverteilung kann unter anderem von den Strömungsgeschwindigkeiten in den jeweiligen Abgängen abhängen. Die Abgänge verzweigen sich jeweils in mindestens eine Saatleitung und in mindestens eine Rückführeinrichtung.

Der Verteilerturm umfasst zumindest ein Absperrmittel zur wahlweisen Blockierung bzw. Absperrung der mindestens einen Saatleitung oder der mindestens einen Rückführeinrichtung, so dass der gebildete Verteilgut-Luftvolumenstrom entsprechend einer Stellung des zumindest einen Absperrmittels wahlweise in die mindestens eine Saatleitung oder in die mindestens eine Rückführeinrichtung geleitet wird. Damit kann mittels des zumindest einen Absperrmittels bestimmt werden, wohin der Verteilgut-Luftvolumenstrom umgeleitet wird; d.h. der jeweilige Verteilgut-Luftvolumenstrom in den Abgängen kann mittels des zumindest einen Absperrmittels eingestellt und entsprechend gesteuert werden.

Das zumindest eine Absperrmittel umfasst ein Vielzahl von Öffnungen, wodurch der Abgang, die mindestens eine Saatleitung und die mindestens eine Rückführeinrichtung dauerhaft pneumatisch miteinander verbunden sind. Die pneumatische Verbindung des Abgangs, der mindestens einen Saatleitung und der mindestens einen Rückführeinrichtung kann unabhängig von der Stellung des zumindest einen Absperrmittels erfolgen. Es kann vorgesehen sein, dass über die Vielzahl von Öffnungen des zumindest einen Absperrmittels jeweils ein geringer Luftvolumenstromanteil vom Verteilgut-Luftvolumenstrom abzweigbar ist. Das zumindest eine Absperrmittel kann für einen geringen Luftvolumenstromanteil luftdurchlässig ausgebildet sein. Der abgezweigte Luftvolumenstromanteil vom Verteilgut-Luftvolumenstrom kann zur pneumatischen Verbindung des Abganges, der mindestens einen Saatleitung und der mindestens einen Rückführeinrichtung sowie des Steigrohrs dienen. Damit können die mindestens eine Saatleitung und die mindestens eine Rückführeinrichtung unabhängig von der Stellung des zumindest einen Absperrmittels dauerhaft pneumatisch miteinander verbunden sein.

Die Vielzahl an Öffnungen des zumindest einen Absperrmittels können eine Öffnungsdiagonale oder einen Durchmesser von bspw. maximal 1,5 mm oder weniger ausbilden. Die Lochgröße kann sich zweckmäßigerweise nach dem auszubringenden Saatgut richten, so dass über die Vielzahl an Öffnungen des Luftvolumenstroms nur ein Luftvolumenstrom abgezweigt wird, während die Körner des Verteilgutes zu groß für die Vielzahl an Öffnungen sind. Die Öffnungen sind sinnvollerweise jeweils kleiner als eine Korngröße des ausgebrachten bzw. auszubringenden Verteilgutes.

Bei einer offenen Stellung des zumindest einen Absperrmittels kann der jeweilige abgezweigte Verteilgut-Luftvolumenstrom vom Abgang über die mindestens eine Saatleitung in Richtung zu den Ausbringelementen bzw. zu den Reihen befördert werden, während die mindestens eine Rückführeinrichtung durch das zumindest eine Absperrmittel und damit für eine Rückführung von Verteilgut in den Verteilerturm bzw. in das Steigrohr versperrt bzw. blockiert ist. Das zumindest eine Absperrmittel kann einen Abscheider bzw. einen Abscheidebereich ausbilden, so dass ein Luftvolumenstromanteil des in Richtung der mindestens einen Saatleitung bewegten Verteilgut-Luftvolumenstroms abgezweigt werden kann. Dieser Luftvolumenstromanteil kann über die Öffnungen des zumindest einen Absperrmittels in die mindestens eine Rückführeinrichtung geleitet werden. Dadurch können die im Verteilerturm vorherrschenden Drücke unabhängig von der Anzahl an geöffneten Abgängen zumindest weitgehend aufrechterhalten werden.

Bei einer geschlossenen Stellung des zumindest einen Absperrmittels kann der jeweilige Verteilgut-Luftvolumenstrom vom Abgang über die mindestens eine Rückführeinrichtung in das Steigrohr des Verteilerturms zurückgeführt werden, während die mindestens eine Saatleitung durch das zumindest eine Absperrmittel und damit für den Verteilgut-Luftvolumenstrom versperrt bzw. blockiert ist. Das zumindest eine Absperrmittel kann einen Abscheider bzw. einen Abscheidebereich ausbilden, so dass ein Luftvolumenstromanteil des zur Rückführeinrichtung bewegten Verteilgut-Luftvolumenstroms abgezweigt werden kann. Dieser Luftvolumenstromanteil kann über die Vielzahl von Öffnungen des zumindest einen Absperrmittels in die mindestens eine Saatleitung geleitet werden. Damit können die im Verteilerturm vorherrschenden Drücke unabhängig von der Anzahl an geöffneten Abgängen zumindest weitgehend aufrechterhalten werden.

Das zumindest eine Absperrmittel kann einen Verschwenkweg zwischen 45° und 90° aufweisen, um zwischen der offenen und der geschlossenen Stellung zu wechseln.

Bei einer offenen Stellung kann das zumindest eine Absperrmittel eine weitgehend horizontale Position einnehmen, so dass die mindestens eine Saatleitung vollständig geöffnet und die mindestens eine Rückführeinrichtung mittels des zumindest einen Absperrmittels versperrt bzw. blockiert ist. Damit kann der über den Abgang abgezweigte Verteilgut-Luftvolumenstrom über die mindestens eine Saatleitung zu den Ausbringelementen bewegt werden.

Bei einer geschlossenen Stellung kann das zumindest eine Absperrmittel in Bezug auf die offene Stellung eine weitgehend schräge bis eine maximal vertikale Position einnehmen, so dass die mindestens eine Rückführeinrichtung vollständig geöffnet und die mindestens eine Saatleitung mittels des zumindest einen Absperrmittels versperrt bzw. blockiert ist. Bei einer geschlossenen Stellung des zumindest einen Absperrmittels kann der durch den Abgang abgezweigte Verteilgut-Luftvolumenstromanteil in die Rückführeinrichtung gelenkt werden, so dass das Verteilgut in das Steigrohr des Verteilerturms transportiert wird. Damit kann das zumindest eine Absperrmittel in Bezug auf die offene Stellung um einen Winkel zwischen 45° und 90° verschwenkt werden. Der Winkel kann von der Länge des zumindest einen Absperrmittels abhängig sein.

Es kann auch zwischen der mindestens einen Saatleitung und der mindestens einen Rückführeinrichtung ein Druckausgleich über einen im Verteilerturm befindenden Luftvolumenstromanteil in beide Richtungen erfolgen. Bei einer offenen Stellung des zumindest einen Absperrmittels kann ein geringer Luftvolumenstromanteil von der mindestens einen Rückführeinrichtung über die Öffnungen des zumindest einen Absperrmittels in die mindestens eine Saatleitung strömen, was für einen zusätzlichen Druckausgleich im Verteilerturm sorgt.

Bei einer geschlossenen Stellung des zumindest einen Absperrmittels kann ein geringer Luftvolumenstromanteil von der mindestens einen Saatleitung über die wenigstens eine Öffnung des zumindest einen Absperrmittels in die mindestens eine Rückführeinrichtung strömen, was für einen zusätzlichen Druckausgleich im Verteilerturm sorgt.

Das zumindest eine Absperrmittel ist durch eine verschwenkbare Weiche oder Klappe ausgebildet, welche Weiche oder Klappe wenigstens eine Vielzahl von Öffnungen umfasst.

Erfindungsgemäß ist das zumindest eine Absperrmittel als Lochblech bzw. als luftdurchlässiges Element ausgebildet. Bei dieser Ausführungsform umfasst das zumindest eine Absperrmittel, insbesondere die Weiche oder Klappe, eine Vielzahl an Öffnungen. Die Vielzahl an Öffnungen sind durch Durchbrüche, Schlitze oder Bohrungen oder dergleichen ausgebildet, wobei die Öffnungen jeweils so ausgebildet sind, dass ein Luftvolumenstromanteil des Verteilgut-Luftvolumenstroms durch die Öffnungen je nach Stellung der Weiche oder Klappe in die mindestens eine Saatleitung oder in die mindestens eine Rückführeinrichtung strömt, während das Verteilgut weiter entlang der mindestens einen Rückführeinrichtung und/oder der mindestens einen Saatleitung bewegt wird. Damit kann unabhängig von der Stellung des zumindest einen Absperrmittels ein geringer Luftvolumenstromanteil vom Verteilgut-Luftvolumenstrom abgezweigt bzw. abgeschieden werden. Das zumindest eine Absperrmittel kann somit einen Abscheider bzw. einen Abscheidebereich ausbilden.

Bei einer offenen Stellung des zumindest einen Absperrmittels kann somit kein ungewolltes Verteilgut in die mindestens eine Rückführeinrichtung transportiert werden, während jedoch ein geringer Luftvolumenstromanteil vom Verteilgut-Luftvolumenstrom abgezweigt wird. Der abgezweigte Luftvolumenstromanteil kann somit über die Vielzahl an Öffnungen des zumindest einen Absperrmittels in die mindestens eine Rückführeinrichtung und damit in das Steigrohr des Verteilerturms strömen, wodurch resultierend ein Druckausgleich im Verteilerturm erzeugt wird. Um einen optimalen Druckausgleich zu erreichen, kann zudem ein im System vorhandener geringer Luftvolumenstromanteil von der mindestens einen Rückführeinrichtung über die Vielzahl an Öffnungen des zumindest einen Absperrmittels in die mindestens eine Saatleitung strömen, d.h. es kann ein Druckausgleich über den Luftvolumenstromanteil in beide Richtungen erfolgen.

Bei einer geschlossenen Stellung des mindestens einen Absperrmittels kann vom Verteilgut-Luftvolumenstrom ein Luftvolumenstromanteil abgezweigt werden, welcher über die Vielzahl an Öffnungen des zumindest einen Absperrmittels in die mindestens eine Saatleitung strömt, während das Verteilgut weiter die mindestens eine Rückführeinrichtung passiert. Neben Verteilgut kann ein geringer Luftvolumenstromanteil entlang der mindestens eine Rückführeinrichtung strömen, um den Transport des Verteilguts zu verbessern und/oder zu unterstützen. Um einen optimalen Druckausgleich im Verteilerturm zu erreichen, kann zudem ein im System vorhandener geringer Luftvolumenstromanteil von der mindestens einen Saatleitung über die Vielzahl an Öffnungen des zumindest einen Absperrmittels in die mindestens eine Rückführeinrichtung strömen, d.h. es kann ein Druckausgleich über den Luftvolumenstromanteil in beide Richtungen erfolgen.

Das zumindest eine Absperrmittel kann aus einem metallischen Material sowie aus Kunststoffmaterial sowie aus jedem beliebigen anderen flächigen Material ausgebildet sein.

Das zumindest eine Absperrmittel kann motorisch verstellbar ausgebildet sein. Eine motorische Verstellbarkeit des zumindest einen Absperrmittels kann durch einen Antrieb elektromotorisch, pneumatisch oder hydraulisch erfolgen.

Das zumindest eine Absperrmittel kann weiter mit einer Rechnereinheit in Verbindung stehen. Die Rechnereinheit kann Signale vorgeben, welche Position das zumindest eine Absperrmittel in den jeweiligen Abgängen einzunehmen hat, d.h. die Rechnereinheit kann Signale zur Ansteuerung des zumindest einen Absperrmittels vorgeben. Die Signale können durch einen Bediener in einer Bedieneinheit manuell vorgegeben werden. Die Bedieneinheit kann als Touchscreen und/oder als Display und/oder als Tastatur ausgebildet sein, über welcher der Bediener die Anzahl an auszubringendem Verteilgut und damit die Anzahl an geöffneten Abgängen vorgibt. Alternativ können die Signale auf Basis von GPS-Daten vorgegeben werden. Wahlweise können die Schaltstellungen zumindest ausgewählter Absperrmittel von mehreren Absperrmitteln auch auf Grundlage von abgespeicherten und vom Benutzer abrufbaren Kennfelddaten vorgegeben werden, bspw. im Zusammenhang mit einer Fahrgassenschaltung der landwirtschaftlichen Verteilmaschine. Bei einer solchen Fahrgassenschaltung werden gezielt einzelne Saatleitungen abgesperrt und die sich daran anschließenden Säschare deaktiviert, um vorgesehene Fahrgassen von Bewuchs weitgehend freizuhalten, damit dort auch bei späteren Überfahrten, bspw. für Pflege- und/oder Pflanzenschutzaktivitäten ohne Beschädigungen des aufwachsenden Bestandes fahren zu können. Der erfindungsgemäße Verteilerturm sowie die erfindungsgemäße landwirtschaftliche Verteilmaschine ermöglichen es auf einfache Weise, einzelne oder mehrere Saatleitungen zu deaktivieren, ohne dadurch die Strömungs- und/oder Förderverhältnisse in allen übrigen Saatleitungen zu beeinflussen oder zu beeinträchtigen.

Es kann vorgesehen sein, dass jeweils die mindestens eine Saatleitung, vorzugsweise in Bezug auf den Abgang, zumindest abschnittsweise eine Umlenkkontur oder einen gekrümmten Verlauf bzw. einen gekrümmten Abschnitt o. dgl. aufweist, durch welche der abgezweigte Verteilgut-Luftvolumenstrom in der mindestens einen Saatleitung eine zumindest teilweise Richtungsänderung erfährt. Der Verteilgut-Luftvolumenstrom kann aus einer weitgehend waagrechten Richtung gemäß dem Abgang in eine Richtung entlang der Längserstreckung der mindestens einen Saatleitung umgelenkt werden. Die zumindest abschnittsweise zwischen dem Abgang und der mindestens einen Saatleitung ausgebildete Umlenkkontur kann eine zumindest bereichsweise Querschnittsverengung umfassen, welche zumindest bereichsweise Querschnittsverengung eine Düse ausbildet bzw. bereitstellt. Innerhalb der zumindest abschnittsweisen ausgebildeten Umlenkkontur kann der Verteilgut-Luftvolumenstrom fokussiert und zentriert werden. Auch kann der Verteilgut-Luftvolumenstrom innerhalb der zumindest abschnittsweisen Umlenkkontur beschleunigt werden.

Im Bereich der Umlenkkontur kann wenigstens ein Sensor vorgesehen sein, so dass die Anzahl und/oder die Menge an passierenden Körnern des Verteilguts ermittelt werden. Der wenigstens eine Sensor kann durch einen Prallsensor und/oder durch einen optischen Sensor ausgebildet sein.

Gemäß einer Ausführungsform der Erfindung kann die Stellung des zumindest einen Absperrmittels in Abhängigkeit der mittels des wenigstens einen Sensors gezählten Körner erfolgen. Ermittelt der wenigstens eine Sensor beispielsweise, dass eine gewünschte Menge an Verteilgut überschritten wird, kann das zumindest eine Absperrmittel die Saatleitung versperren und umgekehrt.

Der Verteilerturm kann weiter eine Rechnereinheit umfassen, welche Rechnereinheit Signale zur Stellung des zumindest einen Absperrelements vorgibt. Die Signale können durch einen Bediener in einer Bedieneinheit manuell vorgegeben werden. Die Bedieneinheit kann als Touchscreen und/oder als Display und/oder als Tastatur ausgebildet sein, über welcher der Bediener die Anzahl an auszubringendem Verteilgut und damit die Anzahl an geöffneten Abgängen vorgibt. Alternativ können die Signale auf Basis von GPS-Daten vorgegeben werden.

Es kann vorgesehen sein, dass die mindestens eine Rückführeinrichtung von einem das Steigrohr umgebenden Trichter ausgebildet ist. Der Trichter kann in das Steigrohr münden, wobei das Steigrohr vor und/oder nach der Einmündung des Trichters eine zumindest bereichsweise Querschnittsverengung und/oder eine zumindest bereichsweise Querschnittserweiterung umfasst. Aufgrund der zumindest bereichsweisen Querschnittsverengung und/oder der zumindest bereichsweisen Querschnittserweiterung kann eine Sogwirkung erzeugt und/oder ausgebildet werden, so dass der in der Rückführeinrichtung transportierte Verteilgut-Luftvolumenstrom angesaugt und in das Steigrohr des Verteilerturms zurückgeführt wird. Auch kann aufgrund der trichterförmigen Ausgestaltung der Verteilgut-Luftvolumenstrom entlang der Längserstreckung der mindestens einen Rückführeinrichtung beschleunigt und fokussiert werden. Die zumindest bereichsweise Querschnittsverengung kann durch eine Düse ausgebildet sein. Die Düse kann vorzugsweise der Einmündung des Trichters in das Steigrohr vorgeordnet sein. Durch die Düse kann der Verteilgut-Luftvolumenstrom zunächst im Steigrohr zentriert werden, damit der Verteilgut-Luftvolumenstrom gleichmäßig in Richtung des Verteilkopfs geführt werden kann. Die zumindest bereichsweise Querschnittserweiterung kann durch einen Diffusor ausgebildet sein. Der Diffusor kann vorzugsweise der Einmündung des Trichters in das Steigrohr nachgeordnet sein.

Die Einmündung des Trichters in das Steigrohr kann derart ausgebildet sein, dass das Steigrohr in diesem Bereich eine Öffnung ausbildet, welche Öffnung durch einen Ringspalt ausgebildet ist. Durch die Öffnung, insbesondere durch den Ringspalt, kann das Steigrohr mit dem Abgang, der Rückführeinrichtung und das Saatleitung pneumatisch verbunden werden, was für einen Druckausgleich im Verteilerturm sorgt. Ein Druckausgleich kann sich jeweils unabhängig von der Stellung des zumindest einen Absperrmittels und unabhängig von der Anzahl an verschlossenen und/oder geöffneten Abgängen sowie unabhängig von weiteren äußeren Einflussbedingungen, wie die Länge der Saatleitungen, einstellen. Vorzugsweise kann der Ringspalt der zumindest bereichsweisen Querschnittsverengung in Form von einer Düse des Steigrohrs vorgeordnet sein, wobei durch die Düse eine Sogwirkung erzeugt wird, so dass der Verteilgut-Luftvolumenstrom angesaugt wird. Das Steigrohr kann weiter eine an den Ringspalt anschließende zumindest bereichsweise Querschnittserweiterung in Form von einem Diffusor umfassen, so dass der Querschnitt des Steigrohrs auf den bisherigen Querschnitt erweitert wird. Darüber hinaus können die zumindest bereichsweise Querschnittsverengung und die zumindest bereichsweise Querschnittserweiterung im Zusammenspiel mit dem Ringspalt dazu beitragen, mögliche Toleranzen des Verteilgut-Luftvolumenstroms auszugleichen und zu beruhigen, was einen positiven Effekt auf die Verteilgenauigkeit des Verteilerturms hat.

Die Zentrierung des Verteilgut-Luftvolumenstroms kann durch ein der Düse und/oder dem Diffusor nachgeordnetes Wellrohr noch weiter verbessert werden. Dieses Wellrohr kann beispielsweise entlang seiner Längserstreckungsrichtung beispielsweise eine Reihe von Querschnittsreduzierungen in Form von Vertiefungen oder Wellen mit geringeren Durchmessern aufweisen. Die einzelnen Abschnitte des Wellrohrs können beispielsweise durch Schweißen oder mittels Klemmstücken verbunden werden. Ebenso können die Abschnitte aus einem metallischen oder nicht metallischen Werkstoff gebildet sein. Auch könnte das Steigrohr einteilig und bspw. aus Kunststoff gefertigt sein.

Um die Druckverhältnisse im Verteilerturm weiter verbessern zu können, kann vorgesehen sein, weitere Komponenten des Verteilerturms dauerhaft pneumatisch miteinander zu verbinden, wie beispielsweise den Verteilerkopf, so dass dieser unabhängig von der Stellung des zumindest einen Absperrmittels dauerhaft pneumatisch mit dem Steigrohr, der Rückführeinrichtung, dem Abgang sowie der Saatleitung verbunden ist.

Der Vorteil der beschriebenen Konfiguration mit Trichter und sich daran anschließenden Sammelbehälter besteht unter anderem darin, dass das bei abgesperrter Saatleitung dort gesammelte Verteilgut nicht unmittelbar in den Vorratstank für das Verteilgut zurückgeführt wird, so dass dadurch keine Verfälschungen in einem ggf. eingestellten Mischungsverhältnis entstehen, wenn bspw. eine aus zwei Tanks gespeiste Saatgut-Dünger-Mischung mit fest vorgegebenem Mischungsverhältnis ausgebracht werden soll.

Die Erfindung betrifft weiter ein Verfahren zum Betreiben einer landwirtschaftlichen Maschine zum Ausbringen von körnigem Verteilgut, wobei das Verfahren durch Anspruch 12 definiert ist und zumindest die nachfolgend erläuterten Schritte umfasst; in einem ersten Schritt wird ein Verteilerturm mit einem Steigrohr und mit einem sich daran anschließenden und ggf., wahlweise bzw. optional als Bestandteil des Verteilerturms ausgebildeten Verteilerkopf bereitgestellt. In einem weiteren Schritt wird dem Verteilerkopf des Verteilerturms ein Verteilgut-Luftvolumenstrom zugeführt. Anschließend wird der Verteilgut-Luftvolumenstrom in eine Vielzahl von Verteilgut-Luftvolumenströme aufgeteilt. Die Vielzahl von Verteilgut-Luftvolumenströmen ergibt sich aus der Anzahl an Abgängen, welche jeweils am Umfang des Verteilerkopfs angeordnet sind. Die Verteilgut-Luftvolumenströme werden in einem weiteren Schritt wahlweise entlang mindestens einer Saatleitung oder entlang mindestens einer Rückführeinrichtung befördert. Der Strömungsweg der Verteilgut-Luftvolumenströme kann dadurch vorgegeben und/oder beeinflusst werden, indem wahlweise die mindestens eine Saatleitung oder die mindestens eine Rückführeinrichtung des jeweiligen Abgangs mittels zumindest eines Absperrelements versperrt bzw. blockiert oder geöffnet wird.

In einem weiteren Schritt werden der Abgang, die mindestens eine Saatleitung und die mindestens eine Rückführeinrichtung dauerhaft pneumatisch miteinander verbunden, indem ein Luftvolumenstromanteil vom Verteilgut-Luftvolumenstrom über wenigstens eine Öffnung des zumindest einen Absperrmittels abgezweigt wird.

Es kann vorgesehen sein, dass der Luftvolumenstromanteil vom Verteilgut-Luftvolumenstrom über eine Vielzahl an Öffnungen, des zumindest einen Absperrmittels wahlweise in die mindestens eine Saatleitung oder in die mindestens eine Rückführeinrichtung strömt. Das pneumatische Verbinden des Abgangs, der mindestens einen Saatleitung und der mindestens einen Rückführeinrichtung kann zu jedem Zeitpunkt und unabhängig von der Stellung des zumindest einen Absperrmittels erfolgen.

Bei einer geöffneten Saatleitung kann der Verteilgut-Luftvolumenstrom entlang der mindestens einen Saatleitung zu den Ausbringelementen bzw. zu den Reihen transportiert werden, wobei davon ein Luftvolumenstromanteil über die Öffnungen des zumindest einen Absperrmittels in die mindestens eine Rückführeinrichtung abgezweigt wird bzw. strömt. Bei einer versperrten Saatleitung kann der Verteilgut-Luftvolumenstrom über die Öffnungen des zumindest einen Absperrmittels in die mindestens eine Rückführeinrichtung umgelenkt und damit in das Steigrohr des Verteilerturms zurückgeführt werden, wobei davon ein Luftvolumenstromanteil über die Öffnungen des zumindest einen Absperrmittels in die mindestens eine Saatleitung abgezweigt wird bzw. strömt.

Die Rückführung des Verteilgut-Luftvolumenstroms kann in das Steigrohr erfolgen, wobei in der Einmündung der Rückführeinrichtung in das Steigrohr eine Sogwirkung erzeugt wird, so dass der Verteilgut-Luftvolumenstrom in seiner Geschwindigkeit beschleunigt bzw. angesaugt wird.

Es kann vorgesehen sein, dass ein Druck zwischen Abgang, Saatleitung und Rückführeinrichtung über einen im Verteilerturm befindenden Luftvolumenstromanteil in beide Richtungen ausgeglichen wird. Das kann bedeuten, dass bei einer offenen Stellung des zumindest einen Absperrmittels ein geringer Luftvolumenstromanteil von der Rückführeinrichtung über die Öffnungen des zumindest einen Absperrmittels in die mindestens eine Saatleitung strömen kann, und dass bei einer geschlossenen Stellung des zumindest einen Absperrmittels ein geringer Luftvolumenstromanteil über die Öffnungen des zumindest einen Absperrmittels von der mindestens einen Saatleitung in die mindestens eine Rückführeinrichtung strömen kann.

Merkmale, welche vorhergehend zu denkbaren Ausführungsformen des erfindungsgemäßen Verteilerturms erwähnt wurden, können ebenso bei denkbaren Ausführungsformen des erfindungsgemäßen Verfahrens vorgesehen sein.

Die Erfindung betrifft zudem eine landwirtschaftliche Maschine zum Ausbringen von granulatartigem Verteilgut, wie Saatgut, Düngemittel o. dgl., mit zumindest einem Verteilerturm gemäß einem der Ansprüche 1 bis 11, wobei die landwirtschaftliche Maschine insbesondere mit einem Verfahren gemäß einem der Ansprüche 12 bis 14 betrieben wird.

Der landwirtschaftlichen Maschine kann ein Vorratstank oder können mehrere Vorratstanks zugeordnet sein, in welchem das Verteilgut gelagert und mitgeführt werden kann. Bei dem Verteilgut kann es sich um Saatgut und/oder um Dünger handeln. Der Vorratstank kann vorzugsweise trichterförmig ausgebildet sein. Unterhalb des Vorratstanks, vorzugsweise am tiefsten Punkt des Vorratstanks, kann eine Dosiervorrichtung angeordnet sein, mittels welcher Verteilgut aus dem Vorratstank entnommen und einem Leitungssystem, vorzugsweise zunächst einer Leitung, zugeführt werden kann. Das entnommene Verteilgut kann mit einem Luftvolumenstrom vermischt werden, so dass ein Verteilgut-Luftvolumenstrom gebildet wird. Der Luftvolumenstrom kann durch ein Gebläse erzeugt werden, welches beispielsweise durch ein Radial- oder Zentrifugalgebläse ausgebildet ist. Mit Hilfe des Luftvolumenstroms kann das Verteilgut entlang der Leitung bis zu einem Verteilerturm transportiert und dort entsprechend aufgeteilt und auf das Feld mittels bodennah angeordneten Ausbringelementen ausgebracht werden. Die Ausbringelemente können beispielsweise durch Scheibenschare oder durch Zinkenschare ausgebildet sein. Bei mehreren Vorratstanks können jeweils mittels der diesen zugeordneten Dosiervorrichtungen den jeweiligen Luftströmen die gewünschten Mengen an Saatgut oder Dünger zudosiert und diese Luftströme anschließend gemischt und vereinigt werden, wodurch eine steuerbare Mischung an Saatgut und Dünger ausgebracht werden kann.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt in einer schematischen Ansicht den Aufbau einer Ausführungsvariante einer landwirtschaftlichen Maschine mit einem Verteilerturm.
Figuren 2A, 2B und 2C zeigen in unterschiedlichen Ansichten eine Ausführungsform des erfindungsgemäßen Verteilerturms.
Figuren 3A und 3B zeigen in einer Schnittdarstellung die verschiedenen Stellungen des zumindest einen Absperrmittels sowie die sich daraus ergebenden Verteilgut-Luftvolumenströme gemäß dem Verteilerturm aus den Figuren 1 bis 2C und verdeutlicht Schritte, wie sie bei diversen Ausführungsformen des erfindungsgemäßen Verfahrens vorliegen können.
Fig. 4 zeigt in einer perspektivischen Schnittdarstellung die Einmündung der mindestens einen Rückführeinrichtung in das Steigrohr und die sich daraus ergebenden Verteilgut-Luftvolumenströme.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie der erfindungsgemäße Verteilerturm, die landwirtschaftliche Maschine und wie das erfindungsgemäße Verfahren ausgestaltet sein können und stellen keine abschließende Begrenzung dar.

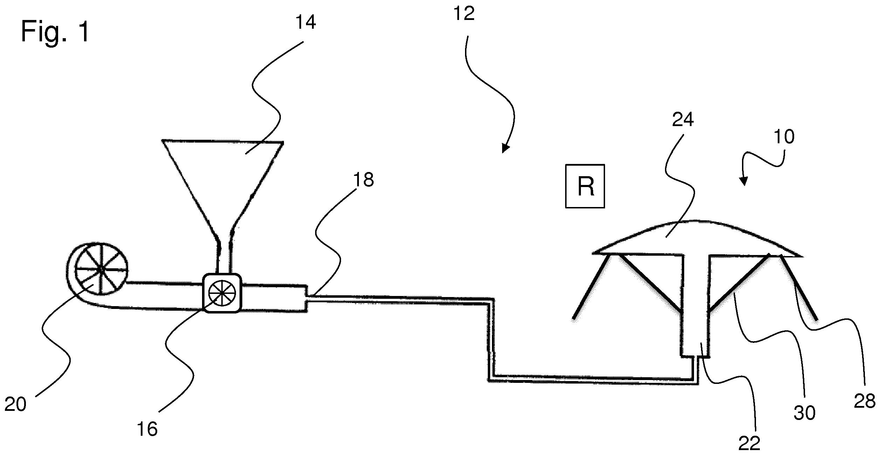

Die Fig. 1 zeigt in einer schematischen Ansicht eine landwirtschaftliche Maschine 12. Bei der landwirtschaftlichen Maschine 12 handelt es sich um eine Sämaschine, welche zum Ausbringen von Verteilgut, wie Saatgut, Dünger oder dergleichen ausgebildet ist. Die landwirtschaftliche Maschine 12 umfasst einen Vorratstank 14, in welchem das Verteilgut gelagert und mitgeführt werden kann. Der Vorratstank 14 ist trichterförmig ausgebildet, wobei am tiefsten Punkt des Vorratstanks 14 eine Dosiervorrichtung 16 vorgesehen ist. Der Dosiervorrichtung 16 ist ein Gebläse 20 vorgeordnet, welches in einer Leitung 18 einen Luftvolumenstrom erzeugt. Das Gebläse 20 ist als Radial- oder Zentrifugalgebläse ausgebildet. Die Dosiervorrichtung 16 entnimmt aus dem Vorratstank 14 eine gewünschte Menge an Verteilgut und führt es der Leitung 18 zu, so dass sich das aus dem Vorratstank 14 entnommene Verteilgut mit dem Luftvolumenstrom vermischt, woraus resultierend ein Verteilgut-Luftvolumenstrom gebildet wird. Mit Hilfe des Luftvolumenstroms wird das Verteilgut entlang der Leitung 18 bis zu einem Verteilerturm 10 transportiert, so dass das Verteilgut anschließend über eine Saatleitung 28 zu hier nicht dargestellten bodennah angeordneten und/oder zu im Boden geführten Ausbringelemente geführt wird. Wahlweise wird das Verteilgut mittels einer Rückführeinrichtung 30 in das Steigrohr 22 des Verteilerturms 10 zurückgeführt.

Es wird an dieser Stelle darauf verwiesen, dass der Verteilerturm 10 auch einen anderen Aufbau besitzen kann, wonach die Leitung 18 in einen Verteilerkopf 24 mündet, welchem Verteilerkopf 24 sich das Steigrohr 22 anschließt.

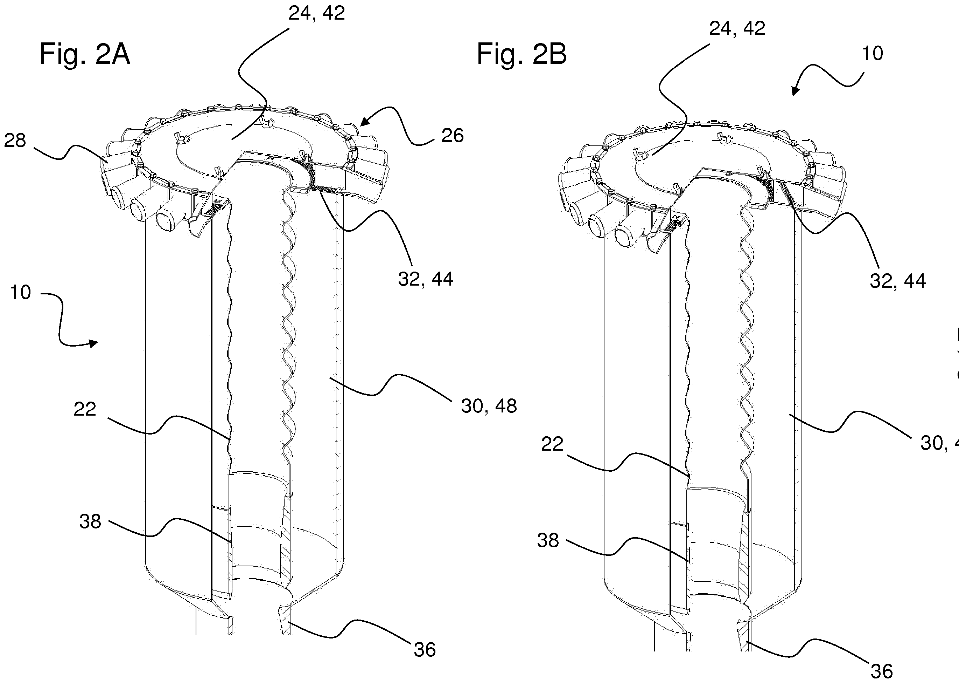

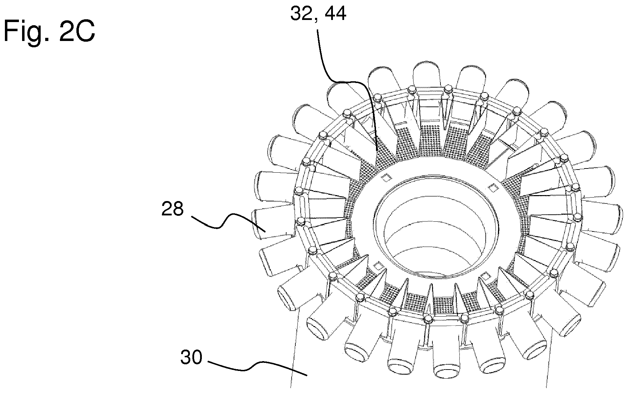

Die Figuren 2A, 2B und 2C zeigen einen Verteilerturm 10, der Teil der Maschine 12 gemäß Fig. 1 sein kann. Der Verteilerturm 10 umfasst ein zumindest weitgehend vertikal ausgebildetes Steigrohr 22, welches Steigrohr 22 mehrere Abschnitte aufweist. In einem ersten Abschnitt weist das Steigrohr 22 eine Düse 36 auf, mittels welcher eine zumindest bereichsweise Querschnittsverengung des Steigrohrs 22 ausgebildet wird. An die Düse 36 schließt sich in einem weiteren Abschnitt ein Diffusor 38 an, mittels welchem eine zumindest bereichsweise Querschnittserweiterung ausgebildet wird. An den Diffusor 38 schließt ein Wellrohr 40 an, welches Wellrohr 40 entlang seiner Längserstreckungsrichtung unterschiedliche Querschnitte aufweist.

Am oberen Ende des Steigrohrs 22 schließt sich ein und als Bestandteil des Verteilerturms 10 ausgebildeter Verteilerkopf 24, welcher ringförmig ausgebildet ist. Am Verteilerkopf 24 ist Vielzahl von Abgängen 26 vorgesehen. Die Abgänge 26 sind in einem gleichmäßigen Abstand am Umfang des Verteilerkopfs 24 angeordnet.

Dem Verteilerturm 10 ist ein Verteilgut-Luftvolumenstrom zuführbar, welcher über die Leitung 18 und über die Steigleitung 22 dem Verteilerkopf 24 zugeführt wird. Der dem Verteilerkopf 24 zugeführte Verteilgut-Luftvolumenstrom wird über die Abgänge 26 in einzelne Verteilgut-Luftvolumenströme aufgeteilt. Hierbei erfährt der Verteilgut-Luftvolumenstrom zunächst eine Richtungsumkehr aus einer zumindest weitestgehend vertikalen Bewegung entlang der Längserstreckungsrichtung des Steigrohrs 22 in eine zumindest weitgehend waagrechte Bewegung in Richtung der Abgänge 26, indem das Verteilgut von weitgehend senkrecht von unten am Deckel 42 des Verteilerkopfes 24 abprallt und durch den Luftvolumenstrom in Richtung der Abgänge 26 geleitet wird. Je gleichmäßiger die Verteilung zwischen den Abgängen 26 erfolgt, desto gleichmäßiger ist die Querverteilung des Verteilguts an der landwirtschaftlichen Maschine 12.

Die Abgänge 26 verzweigen sich jeweils in mindestens eine Saatleitung 28 und in mindestens eine Rückführeinrichtung 30. Die mindestens eine Saatleitung 28 mündet zu hier nicht dargestellten Reihen bzw. Ausbringelementen, welche bodennah angeordnet oder im Boden geführt sind, so dass das Verteilgut auf das Feld ausgebracht werden kann. Die mindestens eine Rückführeinrichtung 30 mündet in das Steigrohr 22, so dass das Verteilgut zurückgeführt wird.

Zumindest einem der Abgänge 26 ist zumindest ein Absperrmittel 32 zugeordnet, mittels welches wahlweise die Saatleitung 28 (vgl. Fig. 2B) oder die Rückführeinrichtung 30 (vgl. Fig. 2C) für den Verteilgut-Luftvolumenstrom absperrbar bzw. blockierbar ist. Über das zumindest eine Absperrmittel 32 kann die Strömungsrichtung des Verteilgut-Luftvolumenstroms bestimmt werden, welche wahlweise entlang der mindestens einen Saatleitung 28 oder entlang der mindestens einen Rückführeinrichtung 30 erfolgt. Das zumindest eine Absperrmittel 32 umfasst einen hier nicht dargestellten Antrieb, welcher elektromotorisch, pneumatisch oder hydraulisch ausgebildet sein kann.

Der Verteilerturm 10 umfasst weiter eine Rechnereinheit R, welcher mit dem zumindest einem Absperrmittel 32 in Verbindung steht. Die Rechnereinheit R gibt Signale zur Ansteuerung des zumindest einen Absperrmittels 32 vor. Die jeweiligen Signale der Rechnereinheit R sind durch einen Bediener über eine hier nicht dargestellte Bedieneinheit in Form eines Touchscreen oder eines Display vorgebbar. Zusätzlich oder alternativ sind die Signale über GPS-Daten vorgebbar.

Das zumindest eine Absperrmittel 32 umfasst eine Vielzahl an Öffnungen und ist als verschwenkbares Lochblech 44 ausgebildet, so dass der Abgang 26, die mindestens eine Saatleitung 28 und die mindestens eine Rückführeinrichtung 30 unabhängig von der Stellung des zumindest einen Absperrmittels 32 dauerhaft pneumatisch miteinander verbunden sind. Wenn in der vorliegenden Beschreibung beim Absperrmittel 32 von einem Lochblech 44 die Rede ist, so können anstelle von Löchern selbstverständlich auch Schlitze oder sonstige luftdurchlässige, aber das Verteilgut zurückhaltende Öffnungen darin vorgesehen sein. Der Begriff des Lochblechs 44 ist daher allgemein und umfassend zu verstehen; so muss das Lochblech 44 keineswegs aus Metall bestehen, sondern kann bspw. auch aus einem beliebigen anderen flächigen Material wie bspw. Kunststoff gefertigt sein.

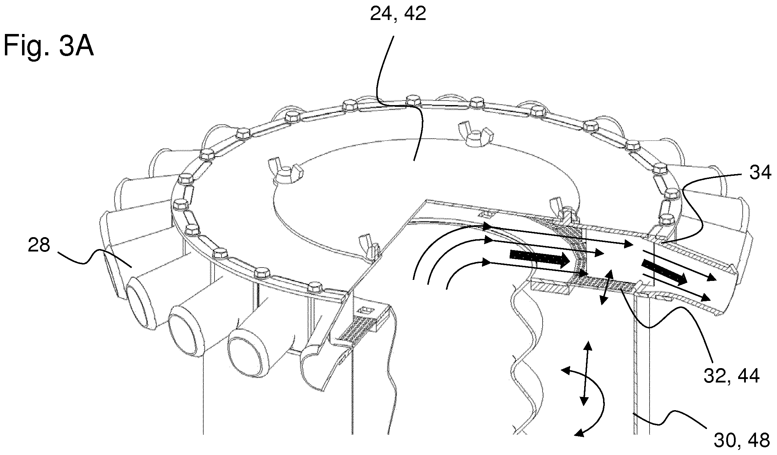

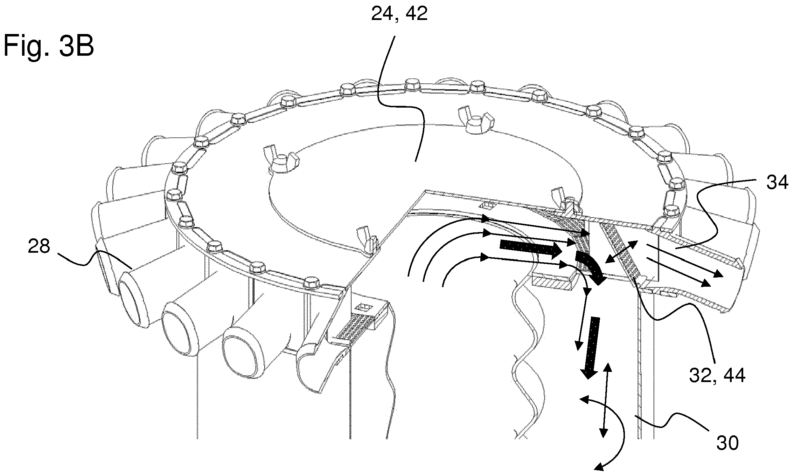

Die Figuren 3A und 3B zeigen einen Ausschnitt des Verteilerturms 10, insbesondere einen Abgang 26 des Verteilerkopfes 24 sowie verschiedene Stellungen des zumindest einen Absperrmittels 32 und den sich daraus ergebenden Verteilgut-Luftvolumenstrom, wobei der Verteilgutstrom jeweils durch einen schwarzen, dicken Pfeil und der Luftvolumenstrom bzw. der Luftvolumenstromanteil durch einen dünnen Pfeil dargestellt sind.

Der im Steigrohr 22 transportierte Verteilgut-Luftvolumenstrom wird mittels des Abgangs 26 in einzelne Verteilgut-Luftvolumenströme aufgeteilt, wobei vorliegend nur ein Verteilgut-Luftvolumenstromanteil abgebildet ist. Der Abgang 26 verzweigt sich jeweils in mindestens eine Saatleitung 28 und in mindestens eine Rückführeinrichtung 30.

Der Verteilerturm 10 umfasst zumindest ein Absperrmittel 32, welches zumindest eine Absperrmittel 32 zumindest einem Abgang 26 zugeordnet ist. Über das zumindest eine Absperrmittel 32 wird wahlweise die mindestens eine Rückführeinrichtung 30 (vgl. Fig. 3A) oder die mindestens eine Saatleitung 28 (vgl. Fig. 3B) abgesperrt bzw. blockiert, so dass damit die Richtung des Verteilgut-Luftvolumenstroms bestimmt wird. Der Verteilgut-Luftvolumenstrom wird damit je nach Stellung des zumindest einen Absperrmittels 32 über die mindestens eine Saatleitung 28 zu den Ausbringelementen oder über die mindestens eine Rückführeinrichtung 30 zurück in das Steigrohr 22 des Verteilerturms 10 bewegt.

Das zumindest eine Absperrmittel 32 umfasst eine Vielzahl an Öffnungen, Durchbrüchen, Bohrungen, Schlitze o. dgl. und ist als verschwenkbares Lochblech 44 (zum Begriff des Lochblechs s.o.) ausgebildet. Damit kann unabhängig von der Stellung des zumindest einen Absperrmittels 32 ein geringer Luftvolumenstromanteil vom Verteilgut-Luftvolumenstrom abgezweigt bzw. abgeschieden werden.

In der Fig. 3A ist eine offene Stellung des zumindest einen Absperrmittels 32 dargestellt, bei welcher die mindestens eine Saatleitung 28 vollständig geöffnet und die Rückführeinrichtung 30 mittels des zumindest einen Absperrmittels 32 versperrt bzw. blockiert ist. Das zumindest eine Absperrmittel 32 befindet sich vorliegend in einer zumindest weitgehend horizontal angeordneten Position. Der über den Abgang 26 abgezweigte Verteilgut-Luftvolumenstrom wird damit über die mindestens eine Saatleitung 28 zu den Ausbringelementen bewegt.

Das zumindest eine Absperrmittel 32 umfasst eine Vielzahl an Öffnungen bzw. ist bspw. durch ein Lochblech 44 o. dgl. luftdurchlässiges Element ausgebildet und bildet damit einen Abscheider bzw. einen Abscheidebereich aus, so dass kein ungewolltes Verteilgut in die Rückführeinrichtung 30 transportiert wird, während ein geringer Luftvolumenstromanteil vom Verteilgut-Luftvolumenstrom abgezweigt wird. Der abgezweigte Luftvolumenstromanteil strömt somit über die Vielzahl an Öffnungen des zumindest einen Absperrmittels 32 in die mindestens eine Rückführeinrichtung 30 und damit in das Steigrohr 22 des Verteilerturms 10, wodurch resultierend ein Druckausgleich im Verteilerturm 10 erzeugt wird. Um einen optimalen Druckausgleich zu erreichen, strömt zudem ein im System vorhandener geringer Luftvolumenstromanteil von der mindestens einen Rückführeinrichtung 30 über die Vielzahl an Öffnungen des zumindest einen Absperrmittels 32 in die mindestens eine Saatleitung 28, d.h. ein Druckausgleich über den Luftvolumenstromanteil erfolgt beide Richtungen.

Die mindestens eine Saatleitung 28 weist in Bezug auf den Abgang 26 eine Umlenkkontur 34 auf, durch welche der abgezweigte Verteilgut-Luftvolumenstrom eine zumindest teilweise Richtungsänderung erfährt. Die Umlenkkontur 34 bildet eine zumindest bereichsweise Querschnittsverengung der mindestens einen Saatleitung 28 aus. Durch die zumindest bereichsweise Querschnittsverengung soll eine Art Düse ausgebildet werden, so dass der Verteilgut-Luftvolumenstrom entlang der Längserstreckung der mindestens einen Saatleitung 28 beschleunigt und fokussiert wird. Im Bereich der Umlenkkontur 34 kann wenigstens ein hier nicht dargestellter Prallsensor vorgesehen sein, welcher die Anzahl und/oder oder die Menge an passierendem Verteilgut ermittelt. Wahlweise können optische Sensoren vorgesehen sein.

In der Fig. 3B ist eine geschlossene Stellung des zumindest einen Absperrmittels 32 dargestellt, bei welcher die Rückführeinrichtung 30 vollständig geöffnet und die mindestens eine Saatleitung 28 mittels des zumindest einen Absperrmittels 32 versperrt bzw. blockiert ist. Bei dieser Stellung des zumindest einen Absperrmittels 32 wird der durch den Abgang 26 abgezweigte Verteilgut-Luftvolumenstromanteil in die Rückführeinrichtung 30 gelenkt, so dass das Verteilgut in das Steigrohr 22 des Verteilerturms 10 transportiert wird.

Das zumindest eine Absperrmittel 32 umfasst eine Vielzahl an Öffnungen bzw. ist als Lochblech 44 ausgebildet und bildet einen Abscheider bzw. einen Abscheidebereich aus, so dass vom Verteilgut-Luftvolumenstrom ein Luftvolumenstromanteil abgezweigt wird, welcher über die Vielzahl an Öffnungen des zumindest einen Absperrmittels 32 in die Saatleitung 28 strömt, während das Verteilgut weiter die mindestens eine Rückführeinrichtung 30 passiert. Neben dem Verteilgut strömt auch weiter ein geringer Luftvolumenstromanteil die mindestens eine Rückführeinrichtung 30 entlang, um den Transport des Verteilguts zu verbessern und/oder zu unterstützen. Um einen optimalen Druckausgleich im Verteilerturm 10 zu erreichen, strömt zudem ein im System vorhandener geringer Luftvolumenstromanteil von der mindestens einen Saatleitung 28 über die Vielzahl an Öffnungen des zumindest einen Absperrmittels 32 in die mindestens eine Rückführeinrichtung 30, d.h. ein Druckausgleich über den Luftvolumenstromanteil erfolgt in beide Richtungen.

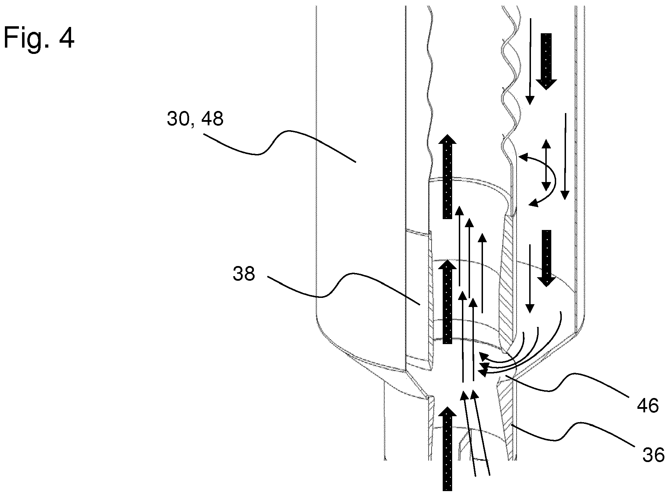

In der Fig. 4 ist die Einmündung der mindestens eine Rückführeinrichtung 30 in das Steigrohr 22 dargestellt, bei welcher die Strömungsrichtung des Verteilgutstroms jeweils durch einen schwarzen, dicken Pfeil und des Luftvolumenstroms bzw. des Luftvolumenstromanteils wird jeweils durch einen schwarzen dünnen Pfeil dargestellt ist.

Die mindestens eine Rückführeinrichtung 30 bildet einen Trichter 48 aus bzw. ist trichterförmig ausgebildet, und umgibt das Steigrohr 22 vollständig. Aufgrund der trichterförmigen Ausgestaltung wird der Verteilgut-Luftvolumenstrom entlang der Längserstreckung der mindestens einen Rückführeinrichtung 30 beschleunigt und fokussiert. Die mindestens eine Rückführeinrichtung 30 steht über eine im Steigrohr 22 vorgesehene Öffnung in Form eines Ringspaltes 46 in Verbindung, so dass der über die mindestens eine Rückführeinrichtung 30 bewegte Verteilgut-Luftvolumenstrom in das Steigrohr 22 zurückgeführt wird.

Die Rückführung des Verteilgut-Luftvolumenstroms in das Steigrohr 22 wird dadurch verbessert, indem dem Ringspalt 46 eine zumindest bereichsweise Querschnittsverengung in Form von einer Düse 36 vorgeordnet ist. Durch die Düse 36 wird eine Sogwirkung erzeugt, so dass der Verteilgut-Luftvolumenstrom in das Steigrohr 22 angesaugt wird. Das Steigrohr 22 umfasst weiter eine an den Ringspalt 46 anschließende zumindest bereichsweise Querschnittserweiterung in Form von einem Diffusor 38, so dass der Querschnitt des Steigrohrs 22 auf den bisherigen Querschnitt erweitert wird. Darüber hinaus tragen die zumindest bereichsweise Querschnittsverengung und die zumindest bereichsweise Querschnittserweiterung im Zusammenspiel mit dem Ringspalt 46 dazu bei, mögliche Toleranzen des Verteilgut-Luftvolumenstroms auszugleichen und zu beruhigen, was einen positiven Effekt auf die Verteilgenauigkeit des Verteilerturms 10 hat.

Um einen optimalen Druckausgleich zu erreichen, strömt ein im Verteilerturm 10 vorhandener Luftvolumenstromanteil entgegen der Strömungsrichtung des Verteilgut-Luftvolumenstroms von der Rückführeinrichtung 30 über das Lochblech 44 in die Saatleitung 28.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Verteilerturm
- 12: Landwirtschaftliche Maschine
- 14: Vorratstank
- 16: Dosiervorrichtung
- 18: Leitung
- 20: Gebläse
- 22: Steigrohr
- 24: Verteilerkopf
- 26: Abgang
- 28: Saatleitung
- 30: Rückführeinrichtung
- 32: Absperrmittel
- 34: Umlenkkontur, Krümmung, gekrümmte Kontur
- 36: Düse
- 38: Diffusor
- 40: Wellrohr
- 42: Deckel
- 44: Lochblech
- 46: Ringspalt
- 48: Trichter

- R: Rechnereinheit

## Patentansprüche

1. Verteilerturm (10) für eine landwirtschaftliche Maschine (12) zum Ausbringen von körnigem Verteilgut, umfassend zumindest:
- ein Steigrohr (22) zum Zuführen eines Verteilgut-Luftvolumenstroms in einen sich an das Steigrohr (22) anschließenden Verteilerkopf (24),
- eine Vielzahl von Abgängen (26) am Verteilerkopf (24) zur Aufteilung des Verteilgut-Luftvolumenstroms in eine Vielzahl von Verteilgut-Luftvolumenströmen, welche Abgänge (26) sich jeweils in mindestens eine Saatleitung (28) und in mindestens eine Rückführeinrichtung (30) verzweigen,
- zumindest ein Absperrmittel (32) zur wahlweisen Blockierung der mindestens einen Saatleitung (28) oder der mindestens einen Rückführeinrichtung (30), so dass der Verteilgut-Luftvolumenstrom entsprechend einer Stellung des zumindest einen Absperrmittels (32) wahlweise in die mindestens eine Saatleitung (28) oder in die mindestens eine Rückführeinrichtung (30) geleitet wird,
- wobei das zumindest eine, als Lochblech oder als luftdurchlässiges Element ausgebildete Absperrmittel (32) eine Vielzahl von Öffnungen umfasst, die durch Durchbrüche, Schlitze oder Bohrungen oder dergleichen gebildet sind, so dass der Abgang (26), die mindestens eine Saatleitung (28) und die mindestens eine Rückführeinrichtung (30) dauerhaft pneumatisch miteinander verbunden sind, und
- wobei das zumindest eine Absperrmittel (32) durch eine verschwenkbare Weiche oder Klappe ausgebildet ist.

2. Verteilerturm nach Anspruch 1, bei welchem mittels der Vielzahl von Öffnungen des zumindest einen Absperrmittels (32) jeweils ein Luftvolumenstromanteil vom Verteilgut-Luftvolumenstrom abzweigbar ist.

3. Verteilerturm nach Anspruch 1 oder 2, bei welchem die Öffnungen des zumindest einen Absperrmittels (32) eine Öffnungsgröße oder einen Durchmesser von maximal 1,5 mm oder weniger aufweisen.

4. Verteilerturm nach einem der vorherigen Ansprüche, bei welchem das zumindest eine Absperrmittel (32) durch ein verschwenkbares Lochblech (44) ausgebildet ist.

5. Verteilerturm nach einem der vorherigen Ansprüche, bei welchem ein Druckausgleich zwischen der mindestens einen Saatleitung (28) und der mindestens einen Rückführeinrichtung (30) über einen im Verteilerturm (10) befindenden Luftvolumenstromanteil in beide Richtungen erfolgt, wobei bei einer offenen Stellung des zumindest einen Absperrmittels (32) ein geringer Luftvolumenstromanteil von der mindestens einen Rückführeinrichtung (30) über die Vielzahl an Öffnungen des zumindest einen Absperrmittels (32) in die mindestens eine Saatleitung (28) strömt oder wobei bei einer geschlossenen Stellung des wenigstens einen Absperrmittels (32) ein geringer Luftvolumenstromanteil von der mindestens einen Saatleitung (28) über die Vielzahl an Öffnungen des zumindest einen Absperrmittels (32) in die mindestens eine Rückführeinrichtung (30) strömt, was jeweils für einen zusätzlichen Druckausgleich im Verteilerturm (10) sorgt.

6. Verteilerturm nach einem der vorherigen Ansprüche, bei welchem die mindestens eine Rückführeinrichtung (30) von einem das Steigrohr (22) umgebenden Trichter (48) ausgebildet ist.

7. Verteilerturm nach Anspruch 6, bei welchem der Trichter (30) in das Steigrohr (22) mündet, wobei das Steigrohr (22) an der Einmündung des Trichters (30) eine zumindest bereichsweise Querschnittsverengung und/oder eine zumindest bereichsweise Querschnittserweiterung aufweist.

8. Verteiierturm nach Anspruch 7, bei welchem die zumindest bereichsweise Querschnittsverengung durch eine Düse (36) ausgebildet ist.

9. Verteilerturm nach Anspruch 7 oder 8, bei welchem die zumindest bereichsweise Querschnittserweiterung durch einen Diffusor (38) ausgebildet ist.

10. Verteilerturm nach einem der vorherigen Ansprüche, bei welchem die mindestens eine Saatleitung (28) in Bezug auf den Abgang (26) eine zumindest abschnittsweise ausgebildete Umlenkkontur (34) aufweist, durch welche der abgezweigte Verteilgut-Luftvolumenstrom entlang der Längserstreckung des Steigrohrs (o.ä.) der mindestens einen Saatleitung (28) eine zumindest teilweise Richtungsänderung erfährt.

11. Verteilerturm nach einem der vorherigen Ansprüche, welcher einer Rechnereinheit (R) umfasst, welche Rechnereinheit (R) Signale zur Stellung des zumindest einen Absperrmittels (32) vorgibt.

12. Verfahren zum Betreiben einer landwirtschaftlichen Maschine (12) zum Ausbringen von Verteilgut, wobei das Verfahren zumindest die folgenden Schritte umfasst:
- Bereitstellen eines Verteilerturms (10) mit einem Steigrohr (22) und mit einem an das Steigrohr (22) anschließenden Verteilerkopf (24),
- Zuführen eines Verteilgut-Luftvolumenstroms über das Steigrohr (22) in den Verteilerkopf (24) des Verteilerturms (10),
- Aufteilen des Verteilgut-Luftvolumenstroms in eine Vielzahl von Verteilgut-Luftvolumenströmen, wobei der Verteilgut-Luftvolumenstrom je nach Stellung des zumindest einen, als Lochblech oder als luftdurchlässiges Element ausgebildeten Absperrmittels (32) wahlweise entlang mindestens einer Saatleitung (28) oder mindestens einer Rückführeinrichtung (30) befördert wird,
- wobei das Absperrmittel (32) eine Vielzahl von Öffnungen umfasst, die durch Durchbrüche, Schlitze oder Bohrungen oder dergleichen gebildet sind,
- wobei der Abgang (26), die mindestens eine Saatleitung (28) und die mindestens eine Rückführeinrichtung (30) dauerhaft pneumatisch miteinander verbunden sind, indem ein Luftvolumenstromanteil vom Verteilgut-Luftvolumenstrom abgezweigt wird, und
- wobei das zumindest eine Absperrmittel (32) durch eine verschwenkbare Weiche oder Klappe ausgebildet ist.

13. Verfahren nach Anspruch 12, bei welchem der Luftvolumenstromanteil vom Verteilgut-Luftvolumenstrom über die Vielzahl an Öffnungen des zumindest einen Absperrmittels (32) strömt.

14. Verfahren nach Anspruch 12 oder 13, bei welchem ein Druck zwischen Abgang (26), Saatleitung (28) und Rückführeinrichtung (30) über einen im Verteilerturm (10) befindenden Luftvolumenstromanteil in beide Richtungen ausgeglichen wird, wobei bei einer offenen Stellung des zumindest einen Absperrmittels (32) ein geringer Luftvolumenstromanteil von der mindestens einen Rückführeinrichtung (30) über die Vielzahl an Öffnungen des zumindest einen Absperrmittels (32) in die mindestens eine Saatleitung (28) strömt oder wobei bei einer geschlossenen Stellung des wenigstens einen Absperrmittels (32) ein geringer Luftvolumenstromanteil von der mindestens einen Saatleitung (28) über die Vielzahl an Öffnungen des zumindest einen Absperrmittels (32) in die mindestens eine Rückführeinrichtung (30) strömt, was jeweils für einen zusätzlichen Druckausgleich im Verteilerturm (10) sorgt.

15. Landwirtschaftliche Maschine (12) zum Ausbringen von granulatartigem Verteilgut, wie Saatgut oder Düngelmittel, mit zumindest einem Verteilerturm (10) gemäß einem der Ansprüche 1 bis 11, wobei die landwirtschaftliche Maschine (12) insbesondere mit einem Verfahren gemäß einem der Ansprüche 12 bis 14 betrieben wird.

## Claims

1. A distribution tower (10) for an agricultural machine (12) for spreading granular distribution goods, the distribution tower (10) comprising at least:
- a riser pipe (22) for supplying an air volume flow of distribution goods into a distributor head (24) connecting to the riser pipe (22);
- a multitude of outflows (26) at the distributor head (24) for dividing the air volume flow of distribution goods into a multitude of air volume flows of distribution goods, which outflows (26) each branch into at least one seed tube (28) and into at least one return device (30);
- at least one shut-off means (32) for optionally blocking the at least one seed tube (28) or the at least one return device (30) such that the air volume flow of distribution goods is optionally guided into the at least one seed tube (28) or into the at least one return device (30) corresponding to a position of the at least one shut-off means (32);
- wherein the at least one shut-off means (32), which is formed as perforated plate or as air-permeable member, comprises a multitude of openings formed by breakthroughs, slits, or bored holes or the like, such that the outflow (26), the at least one seed tube (28), and the at least one return device (30) are permanently pneumatically connected to each other, and
- wherein the at least one shut-off means (32) is formed by a swivelable track switch or flap.

2. The distribution tower according to claim 1, in which an air volume flow portion is in each instance capable of being branched off from the air volume flow of distribution goods by means of the multitude of openings of the at least one shut-off means (32).

3. The distribution tower according to claim 1 or 2, in which the openings of the at least one shut-off means (32) have an opening size or a diameter of a maximum of 1.5 mm or less.

4. The distribution tower according to one of the previous claims, in which the at least one shut-off means (32) is formed by a swivelable perforated plate (44).

5. The distribution tower according to one of the previous claims, in which a pressure balance between the at least one seed tube (28) and the at least one return device (30) is carried out in both directions by way of an air volume flow portion located in the distribution tower (10), wherein a small air volume flow portion flows from the at least one return device (30) by way of the multitude of openings of the at least one shut-off means (32) into the at least one seed tube (28) when the at least one shut-off means (32) is in an open position, or wherein a small air volume flow portion flows from the at least one seed tube (28) by way of the multitude of openings of the at least one shut-off means (32) into the at least one return device (30) when the at least one shut-off means (32) is in a closed position, which in each case provides for an additional pressure balance in the distribution tower (10).

6. The distribution tower according to one of the previous claims, in which the at least one return device (30) is formed by a funnel (48) surrounding the riser pipe (22).

7. The distribution tower according to claim 6, in which the funnel (48) leads into the riser pipe (22), wherein the riser pipe (22) has a cross-sectional narrowing, at least in some areas, and/or a cross-sectional expansion, at least in some areas, at the junction of the funnel (48).

8. The distribution tower according to claim 7, in which the cross-sectional narrowing, which is present at least in some areas, is formed by a nozzle (36).

9. The distribution tower according to claim 7 or 8, in which the cross-sectional expansion, which is present at least in some areas, is formed by a diffusor (38).

10. The distribution tower according to one of the previous claims, in which the at least one seed tube (28) has a deflection contour (34) that is at least in some sections formed in relation to the outflow (26), through which deflection contour (34) the branched-off air volume flow of distribution goods undergoes an at least partial change of direction along the longitudinal extension of the riser pipe (or the like) of the at least one seed tube (28).

11. The distribution tower according to one of the previous claims, which comprises a computer unit (R), which computer unit (R) sets signals for the position of the at least one shut-off means (32).

12. A method for operating an agricultural machine (12) for spreading distribution goods, wherein the method comprises at least the following steps:
- providing a distribution tower (10) with a riser pipe (22) and with a distributor head (24) connecting to the riser pipe (22);
- supplying an air volume flow of distribution goods into the distributor head (24) of the distribution tower (10) by way of the riser pipe (22);
- dividing the air volume flow of distribution goods into a multitude of air volume flows of distribution goods, wherein the air volume flow of distribution goods is conveyed optionally along at least one seed tube (28) or along at least one return device (30) according to the position of the at least one shut-off means (32) formed as perforated plate or as air-permeable member,
- wherein the shut-off means (32) comprises a multitude of openings formed by breakthroughs, slits, or bored holes or the like,
- wherein the outflow (26), the at least one seed tube (28), and the at least one return device (30) are permanently pneumatically connected to each other by an air volume flow portion being branched off from the air volume flow of distribution goods, and
- wherein the at least one shut-off means (32) is formed by a swivelable track switch or flap.

13. The method according to claim 12, in which the air volume flow portion flows from the air volume flow of distribution goods by way of the multitude of openings of the at least one shut-off means (32).

14. The method according to claim 12 or 13, in which a pressure between outflow (26), seed tube (28), and return device (30) is balanced in both directions by way of an air volume flow portion located in the distribution tower (10), wherein a small air volume flow portion flows from the at least one return device (30) by way of the multitude of openings of the at least one shut-off means (32) into the at least one seed tube (28) when the at least one shut-off means (32) is in an open position, or wherein a small air volume flow portion flows from the at least one seed tube (28) by way of the multitude of openings of the at least one shut-off means (32) into the at least one return device (30) when the at least one shut-off means (32) is in a closed position, which in each case provides for an additional pressure balance in the distribution tower (10).

15. An agricultural machine (12) for spreading granular-type distribution goods, such as seeds or fertilisers, with at least one distribution tower (10) according to one of the claims 1 to 11, wherein the agricultural machine (12) is operated, in particular, with a method according to one of the claims 12 to 14.

## Revendications

1. Tour de distribution (10) pour une machine agricole (12), destinée à épandre du matériau d'épandage granuleux, comprenant au moins :
- un tuyau montant (22) destiné à introduire un débit volumique d'air de matériau d'épandage dans une tête de distribution (24) qui vient se raccorder audit tuyau montant (22),
- une pluralité de sorties (26) au niveau de la tête de distribution (24) destinées à répartir le débit volumique d'air de matériau d'épandage dans une pluralité de débits volumiques d'air de matériau d'épandage, lesquelles sorties (26) se ramifient respectivement en au moins une conduite pour semence (28) et en au moins un dispositif de refoulement (30),
- au moins un moyen de blocage (32) permettant au choix de bloquer l'au moins une conduite pour semence (28) ou l'au moins un dispositif de refoulement (30), de sorte que le débit volumique d'air de matériau d'épandage est dirigé, en fonction d'une position de l'au moins un moyen de blocage (32), au choix dans l'au moins une conduite pour semence (28) ou dans l'au moins un dispositif de refoulement (30),
- l'au moins un moyen de blocage (32) réalisé sous forme de tôle perforée ou d'élément perméable à l'air comprenant une pluralité d'orifices qui sont formés par des passages, fentes ou perçages ou équivalents, de sorte que la sortie (26), l'au moins une conduite pour semence (28) et l'au moins un dispositif de refoulement (30) sont reliés pneumatiquement l'un à l'autre de manière durable, et
- l'au moins un moyen de blocage (32) étant réalisé par un séparateur ou clapet basculable.

2. Tour de distribution selon la revendication 1, dans laquelle la pluralité d'orifices de l'au moins un moyen de blocage (32) permet de dévier respectivement une portion de débit volumique d'air du débit volumique d'air de matériau d'épandage.

3. Tour de distribution selon la revendication 1 ou 2, dans laquelle les orifices de l'au moins un moyen de blocage (32) présentent une taille d'orifice ou un diamètre de maximum 1,5 mm ou moins.

4. Tour de distribution selon l'une quelconque des revendications précédentes, dans laquelle l'au moins un moyen de blocage (32) est réalisé par une tôle perforée (44) basculable.

5. Tour de distribution selon l'une quelconque des revendications précédentes, dans laquelle une compensation de pression entre l'au moins une conduite pour semence (28) et l'au moins un dispositif de refoulement (30) s'effectue dans les deux sens via une portion de débit volumique d'air se trouvant dans la tour de distribution (10), une faible portion de débit volumique d'air s'écoulant, lorsque l'au moins un moyen de blocage (32) est en position ouverte, de l'au moins un dispositif de refoulement (30) dans l'au moins une conduite pour semence (28) via la pluralité d'orifices de l'au moins un moyen de blocage (32), ou lorsque l'au moins un moyen de blocage (32) est en position fermée, une faible portion de débit volumique d'air s'écoulant de l'au moins une conduite pour semence (28) dans l'au moins un dispositif de refoulement (30) via la pluralité d'orifices de l'au moins un moyen de blocage (32), ce qui assure respectivement une compensation de pression supplémentaire dans la tour de distribution (10).

6. Tour de distribution selon l'une quelconque des revendications précédentes, dans laquelle l'au moins un dispositif de refoulement (30) est réalisé par un entonnoir (48) entourant le tuyau montant (22).

7. Tour de distribution selon la revendication 6, dans laquelle l'entonnoir (48) débouche dans le tuyau montant (22), ledit tuyau montant (22) présentant au niveau de l'embouchure de l'entonnoir (48) un rétrécissement de section droite au moins partiel et/ou un élargissement de section droite au moins partiel.

8. Tour de distribution selon la revendication 7, dans laquelle le rétrécissement de section droite au moins partiel est réalisé via une buse (36).

9. Tour de distribution selon la revendication 7 ou 8, dans laquelle l'élargissement de section droite au moins partiel est réalisé via un diffuseur (38).

10. Tour de distribution selon l'une quelconque des revendications précédentes, dans laquelle l'au moins une conduite pour semence (28) présente, par rapport à la sortie (26), un contour de déviation (34) réalisé au moins partiellement, par le biais duquel le débit volumique d'air de matériau d'épandage dérivé subit un changement de direction au moins partiel sur la longueur du tuyau montant (ou équivalent) de l'au moins une conduite pour semence (28).

11. Tour de distribution selon l'une quelconque des revendications précédentes, qui comprend une unité de calcul (R), ladite unité de calcul (R) donnant des signaux sur la position de l'au moins un moyen de blocage (32).

12. Procédé destiné à l'exploitation d'une machine agricole (12) destinée à l'épandage de matériau d'épandage, ledit procédé comprenant au moins les étapes suivantes :
- fourniture d'une tour de distribution (10) dotée d'un tuyau montant (22) et d'une tête de distribution (24) raccordée audit tuyau montant (22),
- amenée d'un débit volumique d'air de matériau d'épandage dans la tête de distribution (24) de la tour de distribution (10) via le tuyau montant (22),
- répartition du débit volumique d'air de matériau d'épandage dans une pluralité de débits volumiques d'air de matériau d'épandage, le débit volumique d'air de matériau d'épandage étant convoyé au choix, en fonction de la position de l'au moins un moyen de blocage (32) réalisé sous forme de tôle perforée ou d'élément perméable à l'air, le long d'au moins une conduite pour semence (28) ou d'au moins un dispositif de refoulement (30),
- le moyen de blocage (32) comprenant une pluralité d'orifices qui sont formés par des passages, des fentes ou des perçages ou équivalents,
- la sortie (26), l'au moins une conduite pour semence (28) et l'au moins un dispositif de refoulement (30) étant reliés pneumatiquement l'un à l'autre de manière durable en ce qu'une portion de débit volumique d'air est déviée du débit volumique d'air de matériau d'épandage, et
- l'au moins un moyen de blocage (32) étant réalisé par un séparateur ou clapet basculable.

13. Procédé selon la revendication 12, dans lequel la portion de débit volumique d'air s'écoule du débit volumique d'air de matériau d'épandage via la pluralité d'orifices de l'au moins un moyen de blocage (32).

14. Procédé selon la revendication 12 ou 13, dans lequel une pression est compensée dans les deux sens entre la sortie (26), la conduite pour semence (28) et le dispositif de refoulement (30) via une portion de débit volumique d'air se trouvant dans la tour de distribution (10), une faible portion de débit volumique d'air s'écoulant, lorsque l'au moins un moyen de blocage (32) est en position ouverte, de l'au moins un dispositif de refoulement (30) dans l'au moins une conduite pour semence (28) via la pluralité d'orifices de l'au moins un moyen de blocage (32), ou lorsque l'au moins un moyen de blocage (32) est en position fermée, une faible portion de débit volumique d'air s'écoulant de l'au moins une conduite pour semence (28) dans l'au moins un dispositif de refoulement (30) via la pluralité d'orifices de l'au moins un moyen de blocage (32), ce qui assure respectivement une compensation de pression supplémentaire dans la tour de distribution (10).

15. Machine agricole (12) destinée à l'épandage de matériau d'épandage sous forme de granulés, tel que semences ou engrais, dotée d'au moins une tour de distribution (10) selon l'une quelconque des revendications 1 à 11, la machine agricole (12) étant exploitée notamment au moyen d'un procédé selon l'une quelconque des revendications 12 à 14.
